# NEW EUROPEAN PATENT SPECIFICATION

(11) **EP 1 128 958 B2**
(45) Date of publication and mention of the opposition decision: **03.08.2011**
(45) Mention of the grant of the patent: 03.08.2005
(21) Application number: 99952711.2
(22) Date of filing: 05.11.1999
(51) Int. Cl.: B32B 27/12, C08J 5/24, B29C 70/06

(54) **MOULDING MATERIALS**
FORMMASSEN
MATERIAUX DE MOULAGE

(30) Priority: 06.11.1998 GB 9824320; 31.03.1999 GB 9907489
(43) Date of publication of application: 05.09.2001
(73) Proprietor: Gurit (UK) Limited, Newport Isle of Wight P030 5WU (GB)
(72) Inventor: NESS, Derek, Newport, Isle of Wight PO30 5WU (GB); CRONK, Peter, St. Judes, Plymouth PL4 8SW (GB)
(74) Representative: Jenkins, Peter David
(86) International application number: PCT/GB1999/003667
(87) International publication number: WO 2000/027632

(56) References cited:
- EP-A- 0 224 064
- EP-A- 0 807 514
- WO-A1-98/34979
- WO-A1-99/44810
- DE-A- 3 243 925
- DE-A- 3 536 272
- GB-A- 1 248 060
- US-A- 3 790 432
- US-A- 4 311 661
- US-A- 4 622 091
- US-A- 5 431 995

## Description

The present invention relates to moulding materials. More particularly, it relates to composite moulding materials which include fibres in their structure which in the moulded product will provide reinforcement.

Historically, mouldings were formed from resin either alone or reinforced with fibres. However, whilst in principle the products were satisfactory, where fibres were present, it was difficult to control the ratio of the resin to the reinforcement fibres and thus the quality of the products produced was not consistent. The process was therefore refined such that the supplier of the resin provided the producer of the moulded article with a pre-impregnated reinforcement known as a "prepreg". The moulder is then able to produce the moulded article from the pre-impregnated material confident that the ratio of resin to fibre is correct. Thus, the present invention is particularly directed to preformed prepregs.

It will be understood that conventionally "prepregs" are fibrous composite materials which comprise fibres embedded in a matrix of resin and which are provided in the form of, for example, sheets, strips, or continuous rolls, which can then be placed in contact with a mould prior to the resin being cured to form the moulded product. A prepreg may comprise unidirectional fibres or the fibres may be multi-directional. In use, several layers of prepreg may be layered prior to curing to form a laminate product.

The most basic form of prepreg is a prepreg tape or strip. These tapes or strips comprise unidirectional non-woven fibres held together by resin. These tapes are attractive as the straight fibres provide the finished moulding with good mechanical properties. Further the good packing of the fibres reduces the amount of resin required in the laminate. However, as these tapes have little porosity through their thickness, when multiple layers are used together the tapes or strips trap substantial volumes of air which will lead to voids in the cured laminate.

For the purposes of this application the term prepreg will be used to refer not only to composite materials where the fibres are embedded in the resin but also to those where they are in contact with it.

Howsoever formed, when such prepregs are layered to produce a thick laminated product, certain drawbacks and disadvantages can arise. A thick laminated product is generally understood to have a thickness greater than 2mm and is preferably greater than 4mm and may extend to 40mm.

A particular disadvantage of such thick products is that air can become trapped either within a layer of the moulding material or between adjacent layers. The presence of intra-, inter- or intra- and inter-laminar air can lead to voids being formed in the finished cured product. Such voids can result in the laminate having reduced mechanical properties and can lead to premature failure of the composite material.

Many techniques have been suggested to reduce the occurrence of such voids. One such technique is that of frequent vacuum debulking in which a few layers are laid in the mould and consolidated using vacuum before further layers of moulding material are laid onto the laminate formed in the first step. However, whilst this technique may go some way to addressing the problem of void formation, a void content of 2 to 5% will still commonly be present. Further, the technique of vacuum debulking, whilst being somewhat effective, is labour intensive and is therefore costly and hence not desirable.

The problem of void formation is particularly exacerbated when heavyweight material, for example 1200 g/m² glass fibre unidirectional tape, is used in the production of the moulding. It will be understood that it is desirable to use heavyweight materials in moulding production since their use makes it possible to produce the finished product from fewer layers thereby reducing the costs both of labour and materials. However, where heavyweight material of this kind is used, void formation is particularly prevalent since such materials are generally impervious to air movement through their thickness.

It has been suggested that interleaving dry reinforcement layers between the layers of the prepreg as the laminate is built up can reduce the problem of void formation. However, whilst this technique does go some way towards addressing the problem of void formation, the presence of the dry reinforcement layer reduces the relative resin content of the finished product which may have a detrimental effect on the strength of the finished product. Whilst it is possible to compensate for the loss of resin from the prepreg to the dry reinforcement layers by providing additional resin in the prepreg, such increased resin content materials are difficult to handle because of their high tack and low drape. It is also important that there is complete coincidence of the resin rich prepreg and dry layers throughout the laminate or resin rich or resin lean areas will result.

A similar assembly to the above described interleaved laminate is disclosed in document US-A-4 311 661. This document describes a process for producing a resin-fibre composite article with a relatively low void content. The process comprises the step of forming an assembly on the surface of a mould, the assembly comprising individual layers consisting of a resin film, fibrous reinforcement layers, a porous parting film and a bleeder layer which are each individually laid up.

Document DE-A-35 36 272 relates to a method of fabricating a composite part from a pre-shaped moulding material in a mould.

We have now found that the aforementioned problems can be solved by the provision of a multi-layered moulding material comprising a layer of resin material and conjoined to at least one surface thereof a fibrous layer.

Thus, according to a first aspect of the present invention, there is provided a preform multilayered moulding material according to any of the accompanying claims.

In particular, there is provided a multi-layered moulding material forming a preformed prepreg adapted for use in multiple layers, said multi-layered moulding material comprising a layer of resin material, characterised in that the layer of resin material comprises a first fibrous layer conjoined to the upper surface thereof and a second fibrous layer conjoined to the lower surface thereof by contacting the resin layer and the respective fibrous layers, whereby the outer surfaces of the moulding material are free from resin and dry to touch to allow entrapped air to pass out of said multi-layered moulding material during processing of the material.

The first and second fibrous layers may be formed from the same or different materials.

Typically the fibrous layer is partially impregnated by resin. The fibrous layer can be continuous or discontinuous. In addition, the fibrous layer may be made from glass fibres, carbon fibres, polyethylene fibres, aramid fibres, natural fibres or modified natural fibres. The fibrous layer is preferably a prepreg.

The fibres in the fibrous layer or layers are preferably chosen to be unidirectional. Where the moulding material of the present invention comprises two fibrous layers conjoined to opposing faces of the resin layer, the fibrous layers may be orientated in the same direction or in different directions. In particular, the fibre orientation of the skins of the sandwich material may be 0°, 90°, 0°/90°, +/-45° or quasi isotropic or 0°/+45°/-45°.

The resin material may comprises a thermosetting polymer. Any suitable thermoset resin may be used in the production of the moulding material of the present invention. Particularly suitable resin systems include the epoxy, polyester, vinylester, polyimide, cyanate ester, phenolic and bismaleimide systems. Suitable epoxy resins include diglycidyl ethers of bisphenol A, diglycidyl ethers of bisphenol F, epoxy novolac resins and N-glycidyl ethers, glycidyl esters, aliphatic and cycloaliphatic glycidyl ethers, glycidyl ethers of aminophenols, glycidyl ethers of any substituted phenols, monomers containing methacrylate groups (such as glycidyl methacrylates, epoxy acrylates and hydroxyacrylates) and blends thereof. Also included are modified blends of the aforementioned thermosetting polymers. These polymers are typically modified by rubber or thermoplastic addition.

The resin system may also include additives relevant to the production of the moulding such as hardeners. Other additives may be included to effect the finished moulding such as pigments, UV stabilising additives, anti-mould, anti-fungal and flame retardant additives. Whatever additives are added, it is important to ensure that the viscosity of the resin is sufficiently low during the curing and consolidation steps. If it is not, it will not wet out the dry layers.

The fibre layer or layers may be formed from any suitable fibres. Suitable fibres include glass fibres, carbon fibres and polymeric fibres such as polyethylene fibres and aramid fibres. Suitable glass fibres include those made from E-glass, S-glass, C-glass, T-glass or R-glass. Suitable aramid fibres include those sold under the trade marks KEVLAR and TWARON HM. Ballistic grade aramid fibres may be utilised where this characteristic is required due to the intended use of the finished product. Organic fibres and modified organic fibres such as jute or hemp may also be used.

The fibrous layer may comprise fibres of only one kind or different types of fibre may be combined in the fibrous layer.

The fibres may be used alone or in combination. The fibres may be used in the form of tissue, chopped strand mat, continuous mat, woven fabrics, stitched fabrics, or simple rovings. Any suitable fibre size may be used. Particularly preferred are E-glass yarns having a filament diameter of 5 to 13µm and 11 to 136 tex or E-glass rovings having a filament diameter of 10 to 16µm and 600 to 2400 tex. The fibrous material may be preformed before being laid on to the resin layer or alternatively, loose fibres may simply be laid onto the resin layer.

Typically said fibrous layers are held to said resin layer by inherent tack of the adjacent layers of the resin layer.

The fibrous layer conjoined to one surface is preferably a woven material and the layer conjoined to the opposing surface is preferably nonwoven.

According to a second aspect of the present invention there is provided a method of forming a multi-layered material as described in the first aspect by placing the fibrous layer in contact with the resin layer.

The material of the present invention may be made by any suitable method. However, hot-melt techniques are particularly preferred.

Preferably the method includes the step of vacuum processing said multi-layered materials such that entrapped air is allowed to pass out of the material.

Typically the resin is mixed with a catalyst and one or more additives, and is coated onto a support prior to being contacted by the fibrous layer.

In one method, the resin mixed with catalyst and any additives is preferably coated onto a support, such as siliconised paper substrate, prior to being contacted by the fibrous layer. The resin is preferably coated onto the substrate using a conventional filler. The coating is preferably laid onto the substrate at a raised temperature. The temperature selected will depend on the resin used, however a suitable temperature will be in the region of 60°C.

Any suitable catalyst may be used. The catalyst will be selected to correspond to the resin used. One suitable catalyst for use with an epoxy resin is a dicyandiamide curing agent. The catalyst may be accelerated. Where a dicyandiamide catalyst is used, a substituted urea may be used as an accelerator. Suitable accelerators include Diuron, Monuron, Fenuron, Chlortoluron, bis-urea of toluenediisocyanate and other substituted homologues. The epoxy curing agent may be selected from Dapsone (DDS), Diamino-diphenyl methane (DDM), BF3-amine complex, substituted imidazoles, accelerated anhydrides, metaphenylene diamine, diamino diphenylether, aromatic polyetheramines, aliphatic amine adducts, aliphatic amine salts, aromatic amine adducts and aromatic amine salts. Also suitable for systems containing acrylate functionality are UV photoinitiators such as those which liberate a Lewis or Bronstead acid upon irradiation. Examples include triarylsulphonium salts which possess anions such as tetrafluoroborate or hexafluoroborate.

According to a third aspect of the present invention there is provided an article of manufacture produced from the moulding material of the first aspect or made in accordance with the method of the second aspect. Preferably the article has a void content of less than 2%. More preferably the void content of the article is less than 0.5%.

According to a fourth aspect of the present invention there is provided a method of forming the article of manufacture of the third aspect in which the moulding material is placed in contact with a mould and allowed to cure.

The invention will now be described by way of example with reference to the accompanying example drawings in which:
Figure 1 is schematic diagram of a three layered moulding material in accordance with the present invention;
Figure 2 is schematic diagram of the apparatus used in the production of mouldings using the moulding material of the present invention; and
Figure 3 is schematic diagram of an alternative apparatus.

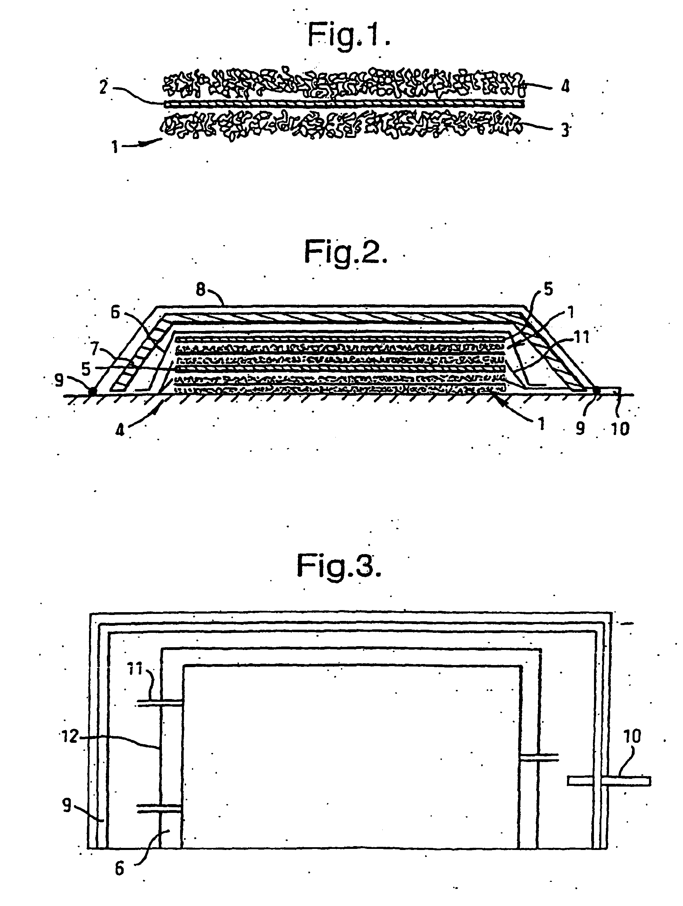

As illustrated in Figure 1, the moulding material of the present invention 1, comprises a central resin film 2 having fibrous layers 3 and 4 located on opposing faces thereof.

In use, this material 1 is laid on the tool surface 4. The material may be laminated with other materials of the present invention or with conventional prepregs. In the arrangement illustrated in Figure 2, two layers of moulding material in accordance with the present invention is interleaved with layers of conventional prepreg 5. This stack is preferably surrounded by a non-perforated film 6, a breather 7 and a vacuum film 8. The vacuum film 8 is sealed to the tooling by means of sealant tape 9 and the air is evacuated during the curing process via vacuum line 10.

Curing is preferably effected at temperatures above ambient.

Glass rovings 11 may be utilised to assist the perimeter air bleed. These glass rovings are particularly advantageous where a zero bleed mode of processing is used. The glass rovings are put through the non-perforated film to assist in the evacuation of air from the laminate stack. To further assist the removal of air, glass rovings may be placed through the non-perforated film in the centre of the panel. These allow air to bleed from the centre of the panel and also connects the moulding materials of the present invention in the laminate together in the z-axis thereby further assisting evacuation of air.

When making sandwich laminates in one operation it is beneficial to have air bleed holes in the core. These allow the air to escape from the underlying laminate thus preventing any closing off of the material under the foam block. Saw cuts in the lower face of the core around the perimeter may also be used to eliminate any closing off effects of the core edge. The saw cuts are typically 2mm deep by 1 mm wide and end 8cm long at a spacing of every 8cm.

The apparatus illustrated in Figure 3 is very similar to that of Figure 2 but is appropriate for use with a large laminate stack.

A suitable cure schedule involves holding the temperature at a point where the resin viscosity is low, for example, 1 Pa (10 poise) to 10 Pas (100 poise) for a period of 4 hours, and remains low for sufficient time for the resin to wet out the fibres of the fibrous layer or layers. A typical cure schedule would be to ramp from 25 to 70°C, a dwell at 70°C for four hours, ramp to 85°C and then held at 85°C for 10 hours. On this schedule a typical resin viscosity would drop down to 4 Pas (40 poise) and at the end of the four hour dwell has only risen to 10 Pas (100 poise). The ramp rates to 70°C or 85°C are not critical. However, they will normally be in the range of 0.1 to 10°C/min.

### Example 1

A prepreg according to the present invention was formed by laying unidirectional E-glass woven reinforcement of 500 g/m² on opposing sides of a layer of 430 g/m² resin. This prepreg was interleaved with layers of conventional prepreg tape of 1200 E-glass with a resin content of 30% by weight. In both types of prepreg the resin used was the SP Systems SE90 available from SP Systems of Structural Polymer (Holdings) Limited of Isle of Wight. The resin is a high flow, 85 to 120°C cure, non-toughened epoxy prepreg cured by an accelerated dicyandiamide curing agent. SE90 prepreg is an epoxy prepreg.

The laminate stack was then covered with nylon peel ply and a microperforated release film, a layer of 150g non-woven breather material and an impervious nylon vacuum bag.

A vacuum of 90% was applied and the assembly heated from ambient to 70°C at 0.3°C/min. The temperature was then held at 70°C for 4 hours. The temperature was then ramped up to 120°C and then held for one hour. The laminate was then cooled to ambient temperature and the laminate was demoulded and examined.

On examination it was noted that the dry reinforcement layers had completely wet out and the laminate was free of entrapped air.

The void content of the laminate was determined by measuring the specific gravity of the sample by weighing it in air and water. The laminate was then put in an oven at 650°C to burn off the resin. From the weight loss and the densities of the resin and the glass, the void content was calculated. Measurements showed the void content to be less than 0.25%. The final fibre volume fraction was 56%.

Whilst the moulding material of the present invention typically has two or three layers, it will be understood that a multi-layer moulding material in accordance with the present invention, may be supplied to the fabricator in an arrangement which comprises more than three layers due to the combination of several layers of the moulding material of the present invention together.

The multi-layered moulding material comprises three layers wherein a central resin layer has a fibrous layer conjoined to either side.

In one alternative arrangement, the multi-layered moulding material comprises five layers in which the two outer layers are dry fibrous layers each attached on its inner surface to a resin film layer. The resin film layers are themselves adhered to a further dry fibrous layer which forms the central (fifth) layer. The resin layers in this multilayered material may be formed from different resins.

Larger multi-layered structures may also be formed in which dry fibrous layers are attached to a resin film layer. Again, the resin film layers in this multi-layered material may be formed from different resins.

Thus, the outer surface of the moulding material is free from resin and is therefore dry to the touch due to the presence of the two fibrous layers and can therefore be handled readily.

Without wishing to be bound by any theory, it is believed that when the material of the present invention is used alone, laminated with further layers of moulding material of the present invention or laminated with layers of conventional prepreg, the fibrous layer of the material of the present invention performs in a similar manner to the dry layers of reinforcement of the conventional systems, in that it allows entrapped air to pass out of the laminate.

One particular benefit of the arrangement of the present invention is that the amount of resin present in the multi-layered moulding material can be controlled such that when the material is cured, the correct amount of resin will flow into the dry fibrous layers and there will be no reduction in the cured resin content.

The moulding material of the present invention surprisingly offers a number of advantages over the conventional moulding materials. One particular benefit of the present invention is that the moulding material exhibits improved handling characteristics when compared to those of conventional materials in that it is more flexible, that is to say it has improved drape and can therefore be used in the production of more complex mouldings. It has been found that the moulding material of the present invention having a fibre weight of 3,500 g/m² has better drape than a comparable conventional prepreg having a fibre weight of 1,700 g/m².

Further, it has been found that the moulding material of the present invention exhibits significantly lower tendency to bridge across details in a moulding. Without wishing to be bound by any theory, we believe that this is due to the abilities of the plies to slide over each other during the consolidation and curing stages. Further, even if bridging does occur, the moulding matenal of the present invention tends to fill any bridged areas with resin rather than leave a void in the laminate. Again, without wishing to be bound by any theory, we believe that this is due to the fact that the potential void has been evacuated by the excellent air transport properties of the material of the invention and thus resin can fill the potential void as no air is trapped. By this means a high quality finished product may be obtained.

This is in contrast to conventional materials, where imperfections may be noted in the surface of the moulding at complex mould areas, such as corners due to bridging of mould areas by the moulding material. It is therefore possible to use the moulding material of the present invention in the production of more complex shapes than has been achievable heretofore.

In conventional prepregs that are processed under vacuum consolidation, it is important that dry areas of reinforcement fibres are avoided since they generally do not completely wet out during the production of the prepreg which may lead to areas of weakness in the finished product. However, where the moulding materials of the present invention are used, the fibrous layer is specifically not wet out during production of the prepreg but will be completely wet out during the processing.

As the improved moulding material of the present invention exhibits these improved characteristics, it is possible to use heavier weight prepregs than has been possible using conventional prepreg technology. With conventional technology, even when heavy weights are produced, they are difficult to handle and therefore are not desirable. However, since the moulding materials of the present invention exhibit improved drape characteristics, even heavier weight prepregs may be handled readily.

In an embodiment of the invention the adhesive properties of the resin layer may be sufficient to retain the fibrous layer howsoever formed in position. In another embodiment the fibrous layer may be retained against the resin layer by means of an adhesive. It will be understood that the adhesive will not prevent the travel of the resin into the fibrous layer during production of the product.

The presence of the tackifier/binder serves a number of functions. First, it may provide a degree of tack to the surfaces of the material therefore assisting adjacent layers of material to be held together during processing.

Secondly, the presence of the tackifier/binder serves to stabilise the fibrous layers and thereby improves the integrity of the surface of the prepreg. This is particularly important where the fibrous layers on the faces of the improved prepreg are made from pure rovings or tows of fibres rather than of woven or stitched materials. The material of this embodiment may have improved handling characteristics and may be less likely to be damaged by handling prior to moulding.

Where a tackifier/binder is present, it may also serve as an interply toughening agent which can give significant improvements in interply fracture energy.

The arrangement of the structure of the fibres in the fibrous layer or of the fibrous layer itself may be altered depending on the properties required to be exhibited in the finished end product. For example, where the product is to be a high performance composite mould tool, it is preferable to use discrete areas of reinforcement rather than continuous lengths. Conventionally, these small areas are of the approximate size 300mm x 300mm. Although the use of fibrous materials having discrete areas of reinforcement offer a range of benefits, they have not generally been accepted by some fabricators in the past as their use is labour intensive. This is particularly the case where the moulding is large in size and comprises several layers. In this connection, it is noted that in the fabrication of, for example, composite tools, the moulding may be made of about 20 layers and be 20 to 50 m² in area.

The discrete panels of fibrous material used to form the fibrous layer of the moulding material of the present invention are preferably squares 300mm x 300mm. Where the moulding material comprises two fibrous layers located on opposing faces of the resin layer, the discrete panels are preferably arranged such that the joints between panels on the upper layer are staggered from those between panels in the lower layer. Thus the inherent strength of the material is not compromised.

It will be understood that a moulding material in accordance with the present invention may be readily formed by laying pieces of fibrous material, of the desired size onto the resin layer. Thus according to a further alternative embodiment of the present invention there is provided a moulding material in which the or each fibrous layer comprises discrete pieces of fibrous material.

The benefit associated with materials formed in this way is that the fabricator can simply roll out the material and the need to separately attach, for example, squares of fibrous material is obviated. As with conventional materials, the materials with these discrete areas of fibres nest down to conform to the tool profile and the risk of bridging areas of the mould leading to the formation of voids is further minimised. The reduced fibre length present in a material of this type also reduces stresses which may arise in the finished laminate. These stresses result from thermal or cure shrinkage and may result in delamination or even change of shape of the tool.

In an alternative embodiment there is provided a moulding material for use in the production of a surface layer comprising a resin layer having a fibrous layer conjoined to each surface thereof. The material conjoined to one surface is preferably a woven material and the layer conjoined to the opposing surface is preferably nonwoven. A light weight fibrous layer, typically 20gm/m².

The moulding materials of the present invention may be formed readily by contacting the resin layer with the or each fibrous layer.

The weight of the resin coated on the support will depend on the properties required of the finished prepreg. However, the weight is generally from 20 to 1,200 g/m² .

The coated substrate may be passed over a chill plate at about 50°C to reduce the temperature of the resin.

Where it is desirable to form a moulding material having fibrous layers located on both sides of the resin layer several methods are available. In one method, two prepregs are formed as described above, the substrates are removed and the two prepregs are then combined with the two resinous sides being placed together such that the fibrous sides are located apart from each other such that they are on the outer faces of the resulting sandwich. When the two resin layers unify the resulting moulding material has a central resin layer conjoined on each face to a fibrous layer.

In one alternative arrangement, a moulding material comprising a resin layer and a single fibrous layer produced as described above is turned such that it lies on the dry fibrous layer, the support is removed and a fibrous layer may then be placed on the exposed resin surface.

In an alternative method of forming the multi-layered moulding material a carrier fabric or tissue is coated on both sides with a resin film and the dry fibrous layers are combined onto each face of the resin film.

In a further alternative method, a fibrous layer is laid as a support and the resin layer is then coated thereon. The second fibrous layer may then be readily laid onto the exposed surface.

The process may be mechanised and may be a batch process or a continuous process.

Particularly improved results in processing the material of the present invention may be obtained where care is taken to ensure that the dry fibrous layers are in contact with a vacuum system to ensure that entrained air can be fully evacuated. One method of achieving the contact between the dry fibrous layers and the vacuum system is to cut the moulding material of the present invention larger than is conventional and then linking it to the vacuum system via an air breathable media. Suitable media include a non-woven breather, woven breather or dry fibrous strands or tows. Suitable non-woven breathers include nylon felted material of 150 g/m².

The woven surface layer generally wets out during the consolidation process. Any suitable woven cloth may be used. However, in a particularly preferred arrangement the material is selected to have a good light stability and to improve the appearance of the finished product.

Once the moulding material of the present invention is formed it may be rolled. An interleave material may be used. A particularly suitable interleave material is a polyethylene interleave.

The moulding material of the present invention may be readily stored until required. The shelf life will be dependant on the resin system. It is preferable that the material is stored at temperatures below zero (most preferably -18°C to -4°C). At ambient temperature, the product has a shelf life in the region of 5 to 55 days, dependant on resin system and fibre weight. After the expiry of the shelf life period, the product is still usable but will have the characteristics and properties of conventional prepregs.

Moulding materials of the present invention or made in accordance with the second aspect of the present invention may be used alone, laminated with further layers of moulding material of the present invention or laminated with conventional prepreg materials. The materials may be processed by any suitable method and are preferably cured by means of a vacuum processing technique to form high quality laminates.

A further advantage of the moulding material of the present invention is that the thick section, i.e. one having thickness greater than 4mm, preferably about 10mm, may be produced in a single operation with no requirement for intermediate consolidation debulking stages.

Where a vertical mould surface is to be coated, a combination of the moulding material of the present invention is preferably used in combination with conventional prepregs as the high tack of the conventional material will help to hold the material of the present invention in place. Alternatively, a moulding material of the present invention coated with tackifier/binder may be used.

The moulding material of the present invention is particularly suitable for use in combination with prepreg tape. The combination of the moulding material of the present invention and the prepreg tape is particularly advantageous since the material of the present invention allows the tape to breathe such that void formation is reduced or even obviated. Further, the arrangement allows even poor quality tapes having dry or partially wet out fibres to be used since on curing the fibres will wet out completely such that a high quality laminate is formed.

In use, once the layers of the laminate have been laid into the mould, the resin is cured. It is desirable that a cure schedule is selected whereby the temperature is held at a point where the resin viscosity is low. The cure schedule selected will depend on the resin used.

Where required a coating may be applied to the moulding. The coating may comprise a conventional gel coat system. Suitable gel coat systems include epoxy with the incorporation of a variety of fillers and pigments. Polyester or vinylester gel coats may also be used.

Whilst these gel coats, provide satisfactory results, they are labour intensive to use. We have now found that an improved coating may be obtained by the use of a modified moulding material of the present invention which is used as the layer closest to the mould. The modified moulding material comprises a layer of resin having a lightweight woven cloth on one face and a non-woven tissue on the other face. This material applied to a tool with the woven cloth facing the mould and backed up with either a conventional moulding material or a moulding material in accordance with the present invention gives a high quality surface substantially free of pinholes or surface porosity.

The moulding material of the present invention may be used alone or laminated with one or more layers of moulding material in accordance with the present invention or conventional moulding materials.

The moulding materials of the present invention may be used in the production of a wide range of products. Examples include products used in the marine industry such as boat hulls, masts, spars; the aerospace industry such as fuselage parts; the motor industry such as car, van or lorry body parts; the sports industry such as surf boards, sailboards, and other sports equipment such as bicycles or hockey sticks, and those used in other industries such as composite tools, composite tubes and turbine blades such as those used in wind turbines.

## Claims

1. A multi-layered moulding material forming a preformed prepreg adapted for use in multiple layers, said multi-layered moulding material comprising a layer of resin material, **characterised in that** the layer of resin material comprises a first fibrous layer conjoined to the upper surface thereof and a second fibrous layer conjoined to the lower surface thereof by contacting the resin layer and the respective fibrous layers, whereby the outer surfaces of the moulding material are free from resin and dry to touch to allow entrapped air to pass out of said multi-layered moulding material during processing of the material.

2. A multi-layered moulding material according to claim 1, **characterised in that** the first and second fibrous layers are formed from the same material.

3. A multi-layered moulding material according to claim 1, **characterised in that** the first and second fibrous layers are formed from different materials.

4. A multi-layered moulding material according to any one of claims 1 to 3, **characterised in that** the or each fibrous layer is partially impregnated by resin.

5. A multi-layer moulding material according to any one of claims 1 to 4, **characterised in that** the fibrous layer is continuous.

6. A multi-layered moulding material according to any one of claims 1 to 5, **characterised in that** the fibrous layer is discontinuous.

7. A multi-layered moulding material according to any one of claims 1 to 6, **characterised in that** the resin material is a thermosetting polymer.

8. A multi-layered moulding material according to claim 7, **characterised in that** the thermosetting polymer is selected from epoxy, polyester, vinylester, polyimide, cyanate ester, phenolic and bismaleimide systems, modifications thereof and blends thereof.

9. A multi-layered moulding material according to any one of claims 1 to 8, **characterised in that** the or each fibrous layer is formed from glass fibres, carbon fibres, polyethylene fibres, aramid fibres, natural fibres or modified natural fibres.

10. A multi-layered moulding material according to any one of claims 1 to 9, **characterised in that** the fibres in the fibrous layer or layers are unidirectional.

11. A multi-layered moulding material according to any one of claims 1 to 10, **characterised in that** the fibres in the fibrous layer or layers are of a woven fabric.

12. A multi-layered moulding material according to any of the preceding claims wherein said fibrous layers are held to said resin layer by the inherent tack of the adjacent surfaces of the resin layer.

13. A multi-layered moulding material for use in the production of a surface layer comprising a multi-layered moulding material according to any one of claims 1 to 12.

14. A multi-layered moulding material for use in the production of a surface layer according to claim 13 in which a woven fibrous layer is conjoined to one surface and a nonwoven fibrous layer is conjoined to the opposing surface.

15. A method of forming a multi-layered material of any one of claims 1 to 14 by placing the fibrous layers in contact with the resin layer.

16. A method according to claim 15, **characterised in that** the resin mixed with catalyst and any additives is coated onto a support prior to being contacted by the fibrous layer.

17. A method of forming an article of manufacture in which the moulding material of any one of claims 1 to 14 is placed in contact with the mould and allowed to cure.

## Patentansprüche

1. Mehrschichtige Formmasse, die ein vorgeformtes, zum Gebrauch in Mehrschichten angepasstes Prepreg bildet, wobei die mehrschichtige Formmasse eine Harzmaterialschicht umfasst, **dadurch gekennzeichnet, dass** die Harzmaterialschicht eine erste Faserschicht umfasst, die mit deren Oberseite verbunden ist, und eine zweite Faserschicht, die mit deren Unterseite verbunden ist, und zwar durch Kontakt der Harzschicht mit den jeweiligen Faserschichten, wodurch die äußeren Flächen der Formmasse frei von Harz sind und sich trocken anfühlen, um eingeschlossene Luft während der Materialverarbeitung aus der mehrschichtigen Formmasse entweichen zu lassen.

2. Mehrschichtige Formmasse nach Anspruch 1, **dadurch gekennzeichnet, dass** die ersten und zweiten Faserschichten aus demselben Material geformt werden.

3. Mehrschichtige Formmasse nach Anspruch 1, **dadurch gekennzeichnet, dass** die ersten und zweiten Faserschichten aus verschiedenen Materialen geformt werden.

4. Mehrschichtige Formmasse nach einem der Ansprüche 1 bis 3, **dadurch gekennzeichnet, dass** die oder jede Faserschicht teilweise mit Harz imprägniert ist.

5. Mehrschichtige Formmasse nach einem der Ansprüche 1 bis 4, **dadurch gekennzeichnet, dass** die Faserschicht kontinuierlich ist.

6. Mehrschichtige Formmasse nach einem der Ansprüche 1 bis 5, **dadurch gekennzeichnet, dass** die Faserschicht diskontinuierlich ist.

7. Mehrschichtige Formmasse nach einem der Ansprüche 1 bis 6, **dadurch gekennzeichnet, dass** das Harzmaterial ein wärmehärtendes Polymer umfasst.

8. Mehrschichtige Formmasse nach Anspruch 7, **dadurch gekennzeichnet, dass** das wärmehärtende Polymer aus den Folgenden ausgewählt wird: Epoxid, Polyester, Vinylester, Polyimid, Cyanatester, phenolische und Bismaleimid-Systeme, sowie daraus gebildete Modifikationen und Mischungen.

9. Mehrschichtige Formmasse nach einem der Ansprüche 1 bis 8, **dadurch gekennzeichnet, dass** die oder jede Faserschicht aus Glasfasern, Kohlenstofffasern, Polyethylenfasern, Aramidfasern, Naturfasern oder modifizierten Naturfasern geformt wird.

10. Mehrschichtige Formmasse nach einem der Ansprüche 1 bis 9, **dadurch gekennzeichnet, dass** die Fasern in der Faserschicht oder in den Faserschichten unidirektional sind.

11. Mehrschichtige Formmasse nach einem der Ansprüche 1 bis 10, **dadurch gekennzeichnet, dass** die Fasern in der Faserschicht oder in den Faserschichten ein Gewebe sind.

12. Mehrschichtige Formmasse nach einem der vorhergehenden Ansprüche, wobei die genannten Faserschichten durch die inhärente Klebrigkeit der benachbarten Oberflächen der Harzschicht an der Harzschicht haften.

13. Mehrschichtige Formmasse zur Verwendung bei der Produktion einer Oberflächenschicht, die eine mehrschichtige Formmasse nach einem der Ansprüche 1 bis 12 umfasst.

14. Mehrschichtige Formmasse zur Verwendung bei der Produktion einer Oberflächenschicht nach Anspruch 13, wobei eine gewebte Faserschicht mit einer Oberfläche verbunden wird und eine nichtgewebte Faserschicht mit der gegenüberliegenden Oberfläche verbunden wird.

15. Verfahren zum Formen eines mehrschichtigen Materials nach einem der Ansprüche 1 bis 14, wobei die Faserschichten mit der Harzschicht in Kontakt gebracht werden.

16. Verfahren nach Anspruch 15, **dadurch gekennzeichnet, dass** das mit dem Katalysator und irgendwelchen Additiven vermischte Harz auf eine Trägersubstanz aufgetragen wird, bevor es mit der Faserschicht in Berührung kommt.

17. Verfahren zum Formen eines Erzeugnisses, wobei die Formmasse nach einem der Ansprüche 1 bis 14 mit der Form in Kontakt gebracht wird und dem Aushärtungsprozess überlassen wird.

## Revendications

1. Matériau de moulage multicouches formant un matériau préimprégné préformé adapté à une utilisation dans des couches multiples, ledit matériau de moulage multicouches comprenant une couche de matériau de résine, **caractérisé en ce que** la couche de matériau de résine comprend une première couche fibreuse accolée à la surface supérieure de celle-ci et une deuxième couche fibreuse accolée à la surface inférieure de celle-ci, en mettant en contact la couche de résine et les couches fibreuses respectives, étant donné que les surfaces externes du matériau de moulage sont exemptes de résine et sèches au toucher, pour permettre à l'air piégé de passer hors dudit matériau de moulage multicouches pendant le traitement du matériau.

2. Matériau de moulage multicouches selon la revendication 1, **caractérisé en ce que** la première et la deuxième couches fibreuses sont formées du même matériau.

3. Matériau de moulage multicouches selon la revendication 1, **caractérisé en ce que** la première et la deuxième couches fibreuses sont formées de matériaux différents.

4. Matériau de moulage multicouches selon l'une quelconque des revendications 1 à 3, **caractérisé en ce que** la ou chaque couche fibreuse est partiellement imprégnée de résine.

5. Matériau de moulage multicouches selon l'une quelconque des revendications 1 à 4, **caractérisé en ce que** la couche fibreuse est continue.

6. Matériau de moulage multicouches selon l'une quelconque des revendications 1 à 5, **caractérisé en ce que** la couche fibreuse est discontinue.

7. Matériau de moulage multicouches selon l'une quelconque des revendications 1 à 6, **caractérisé en ce que** le matériau de résine comprend un polymère thermodurcissable.

8. Matériau de moulage multicouches selon la revendication 7, **caractérisé en ce que** le polymère thermodurcissable est sélectionné parmi les systèmes époxy, polyester, ester vinylique, polyimide, ester de cyanate, phénolique et bismaiéirnide, des modifications de ces derniers et des mélanges de ces derniers.

9. Matériau de moulage multicouches selon l'une quelconque des revendications 1 à 8, **caractérisé en ce que** la ou chaque couche fibreuse est formée de fibres de verre, de fibres de carbone, de fibres de polyéthylène, de fibres aramide, de fibres naturelles ou de fibres naturelles modifiées.

10. Matériau de moulage multicouches selon l'une quelconque des revendications 1 à 9, **caractérisé en ce que** les fibres dans la ou les couches fibreuses sont unidirectionnelles.

11. Matériau de moulage multicouches selon l'une quelconque des revendications 1 à 10, **caractérisé en ce que** les fibres dans la ou les couches fibreuses sont tissées.

12. Matériau de moulage multicouches selon l'une quelconque des revendications précédentes, dans lequel lesdites couches fibreuses sont maintenues à ladite couche de résine par la pégosité inhérente des surfaces adjacentes de la couche de résine.

13. Matériau de moulage multicouches destiné à être utilisé dans la production d'une couche superficielle comprenant un matériau de moulage multicouches selon l'une quelconque des revendications 1 à 12.

14. Matériau de moulage multicouches destiné à être utilisé dans la production d'une couche superficielle selon la revendication 13, dans laquelle une couche fibreuse tissée est accolée à une surface et qu'une couche fibreuse non tissée est accolée à la surface opposée.

15. Procédé de formation d'un matériau multicouches selon l'une quelconque des revendications 1 à 14 en mettant les couches fibreuses en contact avec la couche de résine.

16. Procédé selon la revendication 15, **caractérisé en ce que** la résine mélangée à un catalyseur et à des additifs quelconques est appliquée par revêtement sur un support avant d'être mis en contact avec la couche fibreuse.

17. Procédé de formation d'un article de fabrication dans lequel le matériau de moulage selon l'une quelconque des revendications 1 à 14 est placé en contact avec un moule et a le loisir de durcir.
